# EUROPÄISCHE PATENTSCHRIFT

(11) **EP 0 498 232 B1**
(45) Veröffentlichungstag und Bekanntmachung des Hinweises auf die Patenterteilung: **19.04.1995**
(21) Anmeldenummer: 92101155.7
(22) Anmeldetag: 24.01.1992
(51) Int. Cl.: F16C 19/44, F16C 19/48, F16C 33/48, B23Q 17/22

(54) **Voreinstellgerät für Werkzeuge**
Pre-adjusting device for tools
Appareil de pré-réglage pour outils

(30) Priorität: 04.02.1991 CH 333/91
(43) Veröffentlichungstag der Anmeldung: 12.08.1992
(73) Patentinhaber: PWB AG PRAEZISIONS-WERKZEUG-BAU, CH-9450 Altstätten (CH)
(72) Erfinder: Supanz, Johannes, A-6971 Hard (AT)
(74) Vertreter: Révy von Belvárd, Peter

(56) Entgegenhaltungen:
- EP-A- 0 000 703
- DE-A- 1 951 151
- DE-C- 501 457
- FR-A- 1 215 576
- FR-A- 2 145 086
- FR-A- 2 159 258
- US-A- 1 617 700
- US-A- 2 565 284
- US-A- 4 117 943

## Beschreibung

Die Erfindung bezieht sich auf ein Voreinstellgerät nach dem Oberbegriff des Anspruches 1.

Solche Geräte werden in sog. Bearbeitungszentren verwendet, wo eine Vielzahl von austauschbaren Werkzeugen bzw. Präzisionswerkzeugen vorgesehen ist. Diese müssen vor dem Gebrauch in dem Voreinstellgerät vermessen und voreingestellt werden, was so geschieht, dass die Werkzeuge mit ihrem, meist kegeligen, Lagerzapfen in die entsprechend konische Lagerhülse des Gerätes gesteckt und durch Rotation innerhalb der Lagerbüchse in mehreren Stellungen vermessen - und falls nötig, auch eingestellt - werden.

Durch das Eigengewicht des Werkzeuges, das bei grösseren Werkzeugen erheblich sein kann, ist normalerweise eine Rotation in der Lagerhülse kaum oder nur unter grossem Kraftaufwand möglich, da die Reibung zwischen der Zapfenoberfläche und der Konusinnenfläche der Lagerhülse relativ hoch ist. Gerade aber beim Ausmessen von Präzisionswerkzeugen ist es erforderlich, dass die Werkzeuge in der Lagerhülse leicht rotierbar sind.

Eine bekannten Lösung sieht gemäss der DE-A-1 951 151 vor, dass das Werkzeug in die konische Bohrung einer Reduktionshülse eingesteckt wird. Die Reduktionshülse ist mit ihrer zylindrischen Aussenmantelfläche über eine Wälzlagereinheit innerhalb einer zylindrischen Gehäusebohrung abgestützt. Der Nachteil dieser Lösung besteht darin, dass zur exakten Ausrichtung der Drehachse zwei genauestens übereinstimmende Wälzlager vorgesehen werden. Derartige Wälzlagereinheiten sind ausserordentlich teuer. Ferner besteht die Gefahr, dass die Wälzlagereinheit ein Spiel aufweist, wodurch beim Ausmessen die geforderte Rundlaufgenauigkeit nicht mehr gewährleistet ist.

Der Erfindung liegt deshalb die Aufgabe zugrunde, ein Gerät der eingangs genannten Art mit einer Lagereinheit so auszubilden, dass es höchsten Anforderungen genügen kann. Die Lösung dieser Aufgabe gelingt erfindungsgemäss durch die kennzeichnenden Merkmale des Anspruches 1.

Zwar ist aus der US-A-2 565 284 bereits ein Nadellager vorgeschlagen worden, das auf den ersten Blick eine gewisse Ähnlichkeit mit dem erfindungsgemäss verwendeten Nadellager besitzt, doch sind nach diesem Vorschlag jeweils Bündel von Nadelrollen in Öffnungen eines Käfigs zwischen die konische Aussenmantelfläche einer Lagerhülse und die kegelige Innenfläche der Lagerbuchse gelegt, wobei die Nadeln nicht durch den Käfig gegen herausfallen gehalten werden und wobei die Lagerhülse eine zylindrische Innenmantelfläche besitzt. Es ist klar, dass auch die Anwendung eines derartigen Nadellagers bei einem Gerät nach der genanten DE-A-1 951 151 noch nicht zur vorliegenden Erfindung führen kann, bei der es wesentlich ist, dass die Lagerhülse die Nadeln selbst trägt und sowohl konische Innen- als auch konische Aussenmantelflächen besitzt.

Die gemäss der US-A-2 565 284 vorgesehene Anordnung mehrerer Nadelrollen in gegenseitigem Kontakt führt zu erhöhtem Abrieb zwischen den gegeneinander reibenden Nadelrollen, was einen starken Verschleiss und weitere Ungenauigkeiten hervorruft. Demgegenüber ist es erfindungsgemäss von besonderem Vorteil, wenn die Nadelrollen je einzeln in der Lagerhülse angeordnet sind.

Da sich durch die Erfindung eine besonders hohe Präzision erzielen lässt, ist die Verwendung nach Anspruch 9 bevorzugt.

Weitere Einzelheiten der Erfindung ergeben sich an Hand der nachfolgenden Beschreibung eines in der Zeichnung schematisch dargestellten Ausführungsbeispieles. Es zeigen:
- Fig. 1: einen Axialschnitt durch den Werkzeugaufnahmeteil eines erfindungsgemässen Gerätes;
- Fig. 2: einen der Fig. 1 ähnlichen Axialschnitt, jedoch nach dem Einsetzen einer Reduktionshülse;
- Fig. 3: die erfindungsgemäss verwendete Lagerhülse in axonometrischer Darstellung, wovon die
- Fig. 4: ein die Lagerung einer einzelnen Nadelrolle an der Nadellagerhülse zeigender Detailquerschnitt in grösserem Massstabe und
- Fig. 5: eine Draufsicht auf die Nadelrolle und ihre Lagerung an der Lagerhülse, ebenfalls vergrössert, ist.

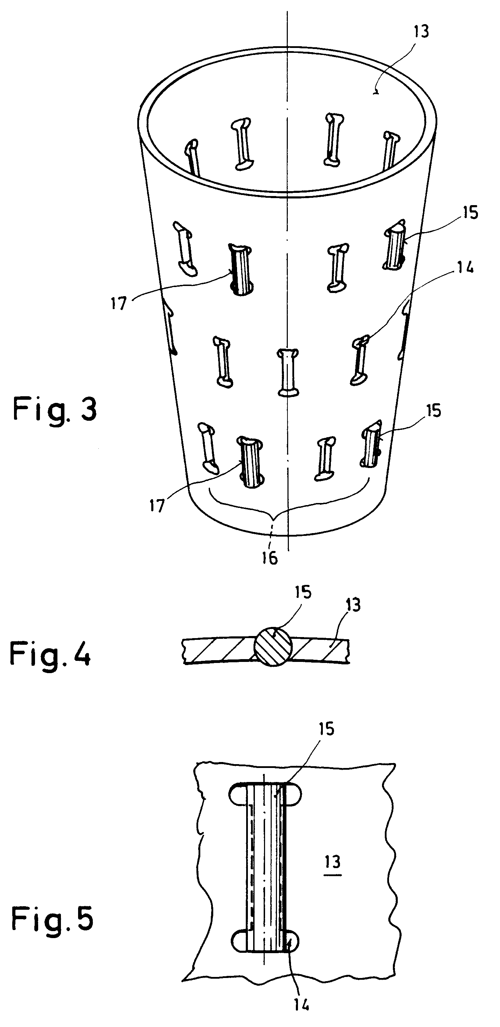

Ein Präzisionswerkzeug 1 ist mit seinem kegeligen Lagerzapfen 3 in eine Lagerbüchse 9 eingesetzt. Zwischen der kegeligen Oberfläche 5 des Lagerzapfens 3 und der ebensolchen Innenmantelfläche 11 der Lagerbüchse 9 ist ein hülsenartiges Nadellager mit einer Nadellagerhülse 13 und einer Anzahl von, vorzugsweise einzeln, darin angeordneten Nadellagerrollen 15 (vgl. besonders Fig. 3), wobei die Nadellagerhülse 13 die Nadelrollen 15 nach Art eines Wälzlagerkäfigs trägt.

Beim Werkzeug 1 kann es sich beispielsweise um ein Präzisionswerkzeug handeln, wie sie in sog. Bearbeitungszentren für die Bearbeitung von Werkstücken der Metallindustrie verwendet werden. Bei der Lagerbüchse 9 handelt es sich um die entsprechende Werkzeugaufnahme eines Voreinstellgerätes zum Ausmessen und/oder Einstellen eines Werkzeuges vor Gebrauch.

Durch das verwendete hülsenartige Nadellager 13, 15 ist es nun leicht möglich, das Werkzeug 1 leicht innerhalb der Lagerbüchse 9 zu drehen, ohne dass Einbussen an Genauigkeit in Kauf genommen werden müssen, denn die konischen Aussen- und Innenmantelflächen der Nadellagerhülse 13 sorgen für genaue Passung und vermeiden jegliches Spiel.

Um einerseits wenig Platz zwischen Lagerbüchse 9 und der Werkzeugoberfläche 5 zu beanspruchen, anderseits eine billige Fertigung trotz hoher Präzision zu ermöglichen, besteht die Nadellagerhülse 13 vorteilhaft mindestens zum Teil aus einem Kunststoff. Besonders geeignet haben sich die Kunststoffe Polyamid, Polyurethan und thermoplastischer Polyester erwiesen, da sie einerseits über gute Gleiteigenschaften, anderseits auch über eine relativ hohe Abriebfestigkeit verfügen. Selbstverständlich können auch andere Kunststoffe, wie Tetrafluoräthylen oder Polyäthylen, verwendet werden, doch sind die zuvor genannten Kunststoffe bevorzugt, zumal wenn sie nicht allzu hart und spröde ausgebildet sind.

Allerdings kommen, für erschwerte Arbeitsbedingungen, auch metallische Werkstoffe, und hier insbesondere Stahl, Messing oder Aluminium, in Betracht.

Gerade im Falle der Verwendung von Kunststoff ist auch die Anfertigung von käfigartig die Nadelrollen 15 lagernden Öffnungen 14 erleichtert, denn die einzelnen Nadelrollen 15 brauchen dann nur in die entsprechenden Aufnahmekerben 14 eingedrückt werden. Ein weiterer Vorteil der Verwendung eines Kunststoffes liegt darin, dass die Nadellagerhülse 13 infolge ihrer elastischen Verformbarkeit nicht mit so hoher Genauigkeit hergestellt werden muss, denn die Nadellagerhülse 13 kann sich leicht exakt an die Flächen 5 und 11 anpassen. Die Herstellung erfolgt dabei vorzugsweise im Spritzguss.

Infolge der Konizität der Mantelflächen ergibt sich natürlich eine unterschiedliche Umfangsgeschwindigkeit. Daher ist es bevorzugt, wenn an der Nadellagerhülse 13 wenigstens zwei, gegebenenfalls sogar mehr als zwei, Nadelkränze 16 vorgesehen sind, um so die Umfangsgeschwindigkeitsunterschiede zu vermindern. Dabei ist es vorteilhaft, wenn die Nadelrollen aller Nadelkränze, wenigstens annähernd, gleich gross sind.

Um aber dennoch eine gleichmässige Verteilung des Druckes des Werkzeuges 1 auf die konischen Lagerflächen zu erreichen, erstrecken sich die Nadelrollen vorteilhaft wenigstens angenähert über die gesamte axiale Länge der Nadellagerhülse 13. Mindestens sollten aber wenigstens zwei Nadellagerkränze 16 so vorgesehen sein, dass der eine dem oberen Rande der Hülse 13, der andere dem unteren Rande unmittelbar benachbart ist, um so schädliche Auswirkungen auf die Ränder der Nadellagerhülse zu vermeiden.

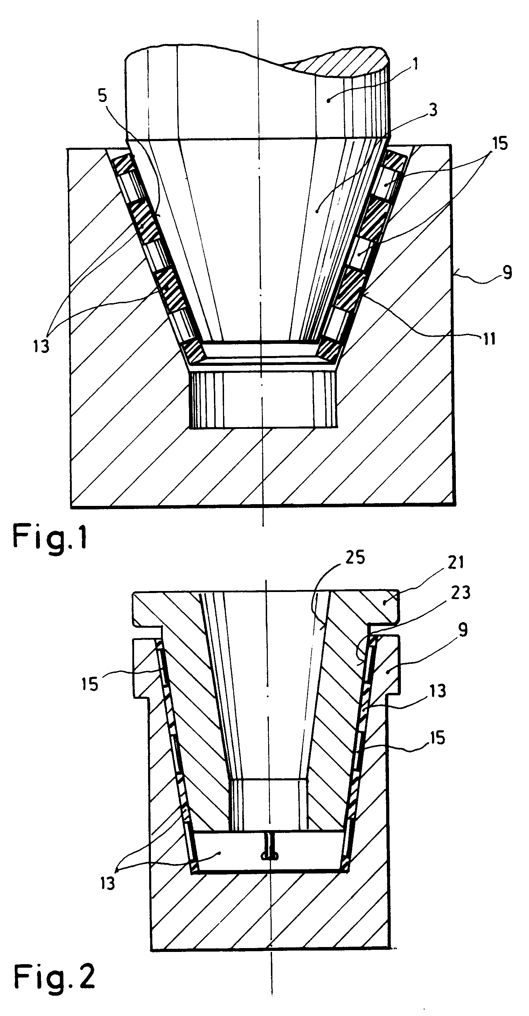

Gemäss Fig. 2 kann in die Lagerhülse 13 eine Reduktionshülse 21 gesteckt werden, deren Aussenmantel derart kegelig ausgebildet ist, dass sie der Konizität der Lagerhülse 13 und der Lagerbüchse 9 genau entspricht. Die Innenmantelfläche 25 dieser Reduktionshülse 21 kann ebenfalls kegelig, gewünschtenfalls aber auch zylindrisch sein, so dass sie als Adapter wirkt, denn so ist es möglich, konische Lagerzapfen geringeren Durchmessers oder zylindrische Lagerzapfen in der Lagerbüchse 9 des Voreinstellgerätes zu lagern.

Aus Fig. 3 ist die Lagerhülse 13 mit ihren einzeln in den kerbenartigen Aufnahmeöffnungen 14 gehaltenen Nadelrollen 15 ersichtlich, wobei die Nadelrollen 15 des obersten und des untersten Nadelkranzes 16 miteinander fluchten, wie es einer bevorzugten Ausführungsform entspricht. Eine solche Anordnung ermöglicht nämlich ein genaues und spielfreies Einsetzen eines Lagerzapfens 3 in die Lagerbüchse 9. Ein dazwischenliegender Nadelkranz kann demgegenüber versetzte Aufnahmeöffnungen 14 mit Nadelrollen 15 besitzen, um die relativ dünne Hülse 13 nicht entlang je einer ihrer Erzeugenden allzusehr zu schwächen.

Eine gewisse Elastizität des für die Nadellagerhülse verwendeten Werkstoffes ermöglicht ein leichtes Eindrücken der Nadelrollen 15 in die Aufnahmekerben 14 der Nadellagerhülse 13, von welchen Kerben eine in Fig. 5 ersichtlich ist. Eine solche Kerbe 14 weist zu beiden Seiten eine federnde Lippe auf, die nach dem Eindrücken der Nadelrolle 15 in ihre ursprüngliche Lage wieder zurückfedern soll. Der Durchmesser der Nadelrolle 15 ist gemäss Fig. 4 etwas grösser als die Wandstärke der Nadellagerhülse 13, so dass die jeweilige Nadellagerrolle 15 beiseitig von der Wandung der Hülse 13 vorragt. Dabei dienen die erwähnten guten Gleiteigenschaften des Kunststoffes dazu, die Drehung der jeweiligen Nadelrolle 15 innerhalb ihrer Aufnahmeöffnung 14 zu erleichtern, allenfalls sogar einen gewissen Schmiereffekt auszuüben. Allerdings kann die, in Fig. 5 gezeigte für ein einfaches Einpressen der Nadelrollen 15 besonders günstige, Form der Aufnahmeöffnungen 14 auch anders gewählt werden.

## Patentansprüche

1. Voreinstellgerät für Werkzeuge, mit einem Wälzlager, das zur Aufnahme eines konisch ausgebildeten Lagerzapfens (3) oder einer Reduktionshülse (21) mit konischem Außenmantel, die zur Aufnahme eines Lagerzapfens dient, ausgebildet ist, dadurch gekennzeichnet, dass das Wälzlager als Nadellager (13, 15) ausgebildet ist und eine Nadellagerhülse (13) mit konischer Innenmantelfläche und konischer Aussenmantelfläche umfasst, wobei die Nadellagerhülse (13) als Käfig für die Nadelrollen (15) zwischen dem konisch ausgebildeten Lagerzapfen (3) oder der Reduktionshülse (21) und einer kegeligen Mantelfläche einer Lagerbüchse (9) angeordnet ist, und je einzelne Nadelrollen (15) umschliessende, insbesondere kerbenartige, Öffnungen (14) aufweist, so dass die in den Öffnungen (14) angeordneten Nadelrollen (15) über die Innen- und Aussenmantelfläche vorstehen, aber nicht aus der Lagerhülse fallen.

2. Gerät nach Anspruch 1, dadurch gekennzeichnet, dass die jeweils eine Nadelrolle (15) in ihren Öffnungen lagernde Nadellagerhülse (13) aus einem Kunststoff, wie Polyurethan, Polyamid oder thermoplastischem Polyester, gefertigt ist.

3. Gerät nach Anspruch 1, dadurch gekennzeichnet, dass die jeweils eine Nadelrolle (15) in ihren Öffnungen lagernde Nadellagerhülse (13) aus einem metallischen Werkstoff gefertigt ist.

4. Gerät nach einem der vorhergehenden Ansprüche, dadurch gekennzeichnet, dass wenigstens zwei, axial voneinander beabstandete Nadelkränze (16) an der Nadellagerhülse (13) mit konischen Innen- und Aussenmantelflächen vorgesehen sind, und dass vorzugsweise die Nadelrollen (15) aller Nadelkränze (16) gleich gross sind.

5. Gerät nach Anspruch 4, dadurch gekennzeichnet, dass Nadellagerkränze (16) über die gesamte axiale Länge der mit konischen Innen- und Aussenflächen versehenen Nadellagerhülse (13) verteilt sind.

6. Gerät nach Anspruch 4 oder 5, dadurch gekennzeichnet, dass die Nadelrollen (15) zweier Nadellagerkränze (16) miteinander fluchten und/oder die Nadelrollen (15) einander benachbarter Nadelkränze (16) gegeneinander versetzt sind (Fig. 3).

7. Gerät nach einem der Ansprüche 4 bis 6, dadurch gekennzeichnet, dass wenigstens zwei Nadelkränze (16) vorgesehen sind, von denen der eine dem oberen, der andere dem unteren Rand der Nadellagerhülse (13) unmittelbar benachbart ist.

8. Gerät nach einem der vorhergehenden Ansprüche, dadurch gekennzeichnet, dass ein hülsenartig ausgebildeter Körper mit konischem Aussenmantel (23) als Reduktionshülse (21) vorgesehen und in die Bohrung der Nadellagerhülse (13) eingesteckt ist.

9. Verwendung eines Voreinstellgerätes nach einem der vorhergehenden Ansprüche für das Ausmessen und Einstellen eines Werkzeuges, insbesondere eines Präzisionswerkzeuges.

## Claims

1. Presetting device for tools, having an anti-friction bearing designed to accommodate a conically shaped journal (3) or a taper sleeve (21) with conical external surface which serves to accommodate a journal,
characterised in that the anti-friction bearing is in the form of a needle-roller bearing (13, 15) and comprises a needle-bearing sleeve (13) with conical internal circumferential surface and conical external circumferential surface, the needle-bearing sleeve (13) being arranged as a cage for the needle rollers (15) between the conically shaped journal (3) or the taper sleeve (21) and a tapering circumferential surface of a bearing bush (9), and in each case incorporating openings (14), more particularly in the form of slots, which enclose the individual needle rollers (15), with the result that the needle rollers (15) arranged in the openings (14) project beyond the internal and external circumferential surface but do not fall out of the bearing sleeve.

2. Device according to claim 1, characterised in that the needle-bearing sleeve (13) which houses a needle roller (15) in each of its openings is made from a plastic such as polyurethane, polyamide or thermoplastic polyester.

3. Device according to claim 1, characterised in that the needle-bearing sleeve (13) which houses a needle roller (15) in each of its openings is made from a metallic material.

4. Device according to any of the preceding claims, characterised in that at least two axially spaced needle rings (16) are provided on the needle-bearing sleeve (13) with conical internal and external circumferential surfaces, and that the needle rollers (15) of all the needle rings (16) are preferably the same size.

5. Device according to claim 4, characterised in that needle-bearing rings (16) are distributed along the entire axial length of the needle-bearing sleeve (13) provided with conical internal and external faces.

6. Device according to claim 4 or 5, characterised in that the needle rollers (15) of two needle-bearing rings (16) are flush with one another and/or the needle rollers (15) of neighbouring needle rings (16) are offset relative to one another (Fig. 3).

7. Device according to claims 4 to 6, characterised in that at least two needle rings (16) are provided, one immediately adjacent to the upper edge, and the other immediately adjacent to the lower edge of the needle-bearing sleeve (13).

8. Device according to any of the preceding claims, characterised in that a sleeve-type body with conical external surface (23) is provided as the taper sleeve (21) and is pushed into the bore of the needle-bearing sleeve (13).

9. Use of a presetting device according to any of the preceding claims for gauging and setting a tool, more particularly a precision tool.

## Revendications

1. Appareil de pré-réglage pour outils, avec un palier à roulement, conçu pour supporter un tourillon de palier (3) conique ou une douille de réduction (21) à enveloppe extérieure conique, servant à supporter un tourillon de palier, caractérisé en ce que le palier à roulement est réalisé sous forme de palier à aiguille (13, 15) et comprend une douille de tourillonnement à aiguilles (13) avec une surface d'enveloppe intérieure conique et une surface d'enveloppe extérieure conique, la douille de tourillonnement à aiguilles (13) étant disposée, pour faire office de cage pour les galets en forme d'aiguilles (15), entre le tourillon de palier (3) conique ou une douille de réduction (21) et une surface d'enveloppe conique d'une douille de tourillonnement (9) et présentant des ouvertures (14), en particulier en forme d'entailles, entourant individuellement chaque galet en forme d'aiguille (15), de sorte que les galets en forme d'aiguilles (15) disposés dans les ouvertures (14) fassent saillie au-dessus des surfaces enveloppes intérieure et extérieure mais ne s'échappent pas hors de la douille de tourillonnement.

2. Appareil selon la revendication 1, caractérisé en ce que la douille de tourillonnement à aiguilles (13) servant au tourillonnement, dans ses ouvertures, des différents galets en forme d'aiguille (15) est fabriquée en une matière synthétique telle qu'en polyuréthanne, en polyamide, ou bien en un polyester thermoplastique.

3. Appareil selon la revendication 1, caractérisé en ce que la douille de tourillonnement à aiguilles (13) servant au tourillonnement, dans ces ouvertures des différents galets en forme d'aiguille (15) est fabriquée en un matériau métallique.

4. Appareil selon l'une des revendications précédentes, caractérisé en ce qu'au moins deux couronnes de tourillonnement d'aiguille (16), espacées axialement l'une de l'autre, sont prévues sur la douille de tourillonnement à aiguilles (13) avec des surfaces d'enveloppe intérieure et extérieure et en ce que, de préférence, les galets en forme d'aiguilles (15) de toute les couronnes à aiguille (16) sont de tailles identiques.

5. Appareil selon la revendication 4, caractérisé en ce que les couronnes de tourillonnement d'aiguille (16) sont réparties sur la totalité de la longueur axiale de la douille de tourillonnement d'aiguille (13) pourvue de surfaces intérieure et extérieure conique.

6. Appareil selon la revendication 4 ou 5, caractérisé en ce que les galets en forme d'aiguille (15) de deux couronnes de tourillonnement d'aiguille (16) sont alignés les uns les autres et/ou les galets en forme d'aiguille (15) de couronnes d'aiguille (16) voisines sont décalées les unes par rapport aux autres (figure 3).

7. Appareil selon l'une des revendications 4 à 6, caractérisé en ce qu'au moins deux couronnes d'aiguille (16) sont prévues, dont l'une est directement voisine du bord supérieur et l'autre directement voisine du bord inférieur de la douille de tourillonnement d'aiguille (13).

8. Appareil selon l'une des revendications précédentes, caractérisé en ce qu'est prévu un corps en forme de douille avec une enveloppe extérieure (23) conique, servant de douille de réduction (21) et enfilé dans l'alésage de la douille de tourillonnement d'aiguille (13).

9. Utilisation d'un appareil de pré-réglage selon l'une des revendications précédentes pour le mesurage et le réglage d'un outil, en particulier un outil de précision.
